# FASCICULE DE BREVET EUROPEEN

(11) **EP 1 132 234 B1**
(45) Date de publication et mention de la délivrance du brevet: **22.09.2004**
(21) Numéro de dépôt: 00400597.1
(22) Date de dépôt: 06.03.2000
(51) Int. Cl.: B60J 5/04

(54) **Module de porte de véhicule avec panneau porteur intégré**
Fahrzeugtürmodul mit integrierter, tragender Bauplatte
Module of vehicle door with integrated bearing panel

(43) Date de publication de la demande: 12.09.2001
(73) Titulaire: ArvinMeritor Light Vehicle Systems-France, 45600 Sully sur Loire (FR)
(72) Inventeur: Arquevaux, Laurent, 45600 Sully/Loire (FR); Delire, Philippe, 72170 Beaumont/Sarthe (FR)
(74) Mandataire: Jacobson, Claude

(56) Documents cités:
- EP-A- 0 796 753
- WO-A-94/03341
- DE-A- 19 509 282
- DE-A- 19 654 956
- DE-A- 19 755 899
- FR-A- 2 788 022
- GB-A- 2 315 513

## Description

La présente invention a pour objet un module de porte de véhicule automobile selon le préambule de la revendication n°1, du type comprenant un panneau muni de divers équipements dont un lève-vitre à deux rails de guidage de curseurs supportant la vitre, et à câbles d'entraînement des curseurs. Un module de porte de ce type est révélé dans le document DE 19509282 A.

Un lève-vitre de ce type comprend également un tambour disposé dans un capot et sur lequel viennent s'enrouler les câbles, des moyens de fixation du capot au panneau, ainsi que des moyens de commande du tambour en rotation disposés d'un côté du panneau opposé au côté sur lequel sont placés les rails, les câbles, le capot et le tambour.

Ainsi le capot recevant le tambour doit être rapporté de manière étanche sur le panneau porteur par des moyens appropriés, tout en étant solidarisé avec les moyens d'entraînement du lève-vitre situés du côté opposé au panneau porteur, c'est à dire du côté « sec », le capot , les rails et les câbles étant situés du côté extérieur, « humide ».

Cette structure et le mode d'assemblage correspondant du lève-vitre sur le panneau impliquent un moulage séparé du capot du tambour et du panneau porteur, et des manipulations spécifiques pour monter le capot sur le panneau et le fixer sur celui-ci ainsi qu'une attention particulière pour maintenir l'étanchéité au niveau des joints de fixation. En outre, compte tenu de la nécessité de maintien de l'assemblage capot/tambour, il est nécessaire de lui adjoindre temporairement une pince de maintien du tambour dans celui-ci lors du processus de montage.

L'invention a pour but de réaliser un module de porte agencé de manière à réduire le nombre total de pièces nécessaires, à intégrer davantage les pièces existantes et à réduire les opérations d'assemblage par suppression de la pince et changement de méthode d'assemblage.

Conformément à l'invention, le capot du tambour est réalisé monopièce avec le panneau, et comporte des moyens de retenue du tambour dans ledit capot pouvant être utilisés lors de l'assemblage.

On réalise ainsi un module avec un nombre total de pièces réduit puisque le capot fait partie intégrante du panneau, lequel peut être, soit en matière plastique, soit en métal.

Un autre avantage important obtenu grâce à cette intégration du capot du tambour avec le panneau est qu'il devient possible de monter l'ensemble des pièces du lève-vitre du même côté, extérieur du panneau, à l'exception des organes d'entraînement du tambour, c'est à dire une manivelle pour un entraînement manuel, ou un moteur et son unité électronique de commande pour un lève-vitre électrique.

On utilise, de manière connue en soi, un poinçon et une matrice profilés pour délimiter entre eux des intervalles adaptés pour recevoir la matière coulée afin de former une paroi, un logement pour le tambour et des gorges de passage des câbles du lève-vitre et des gorges de maintien des « pipes » du lève-vitre.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en élévation longitudinale simplifiée d'une forme de réalisation du module de porte de véhicule conforme à l'invention.

La figure 2 est une vue de dessus, côté humide, à échelle réduite du capot pour le tambour d'entraînement du lève-vitre équipant le module de la figure 1.

La figure 2A est une vue en élévation à échelle réduite par rapport à la figure 2 du capot du tambour.

La figure 3 est une vue en plan de la face arrière, côté sec, du capot de la figure 2, tournée du côté « sec » du module de porte de la figure 1.

La figure 4 est une vue en élévation d'un exemple de carter de fixation de l'équipement d'entraînement du tambour du lève-vitre, placé du côté « sec » du module de porte de la figure1.

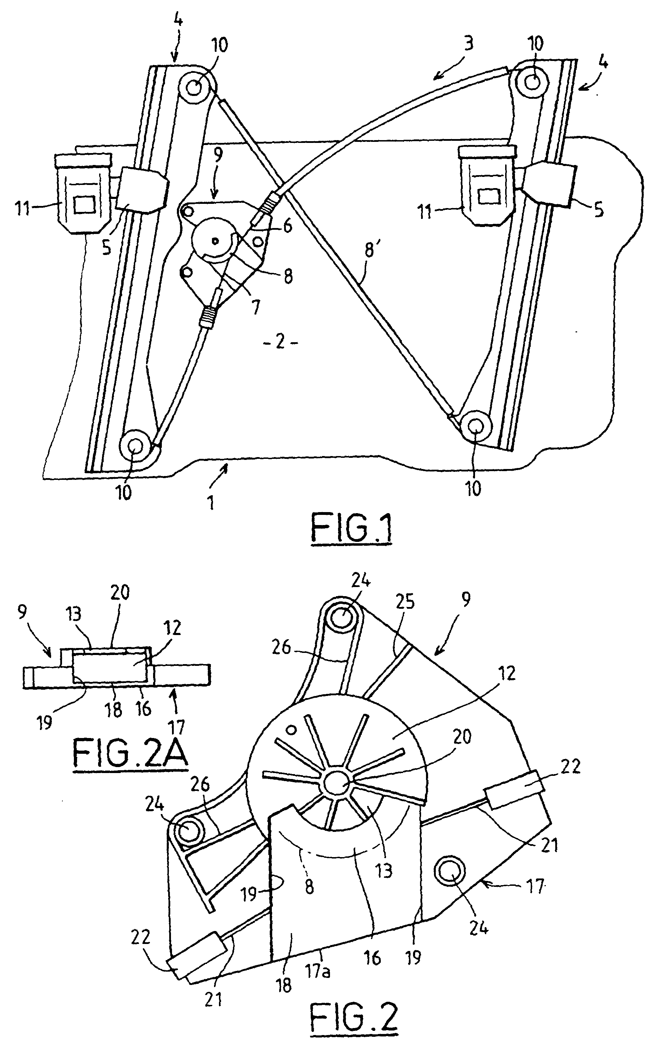

Le module 1 de porte de véhicule illustré à la figure 1 comprend un panneau 2 muni de divers équipements dont un lève-vitre 3 du type à deux rails 4 de guidage de curseurs correspondants 5 supportant une vitre non représentée. Le lève-vitre 3 comprend également trois câbles 6,7, 8' d'entraînement des curseurs 6, ces câbles 6, 7 pouvant s'enrouler dans des gorges d'un tambour 8 disposé dans un capot 9 solidaire du panneau porteur 2.

Aux curseurs 5 sont associées des pinces respectives 11 connues en soi, et qui reçoivent entre leurs mâchoires le bord inférieur de la vitre.

Le tambour 8 peut être entraîné en rotation par des moyens de commande disposés du côté du panneau 2 opposé au côté extérieur, « humide », sur lequel sont placés les rails 4, les câbles 6, 7, 8', le capot 9 et le tambour 8. Les moyens de commande du tambour 8, placés du côté « sec » du panneau 2, sont constitués soit par une poignée manuelle d'entraînement dans un lève-vitre manuel, soit par un système à motoréducteur éventuellement équipé d'une unité électronique de commande, ces éléments étant connus en soi et non représentés.

Les extrémités supérieures et inférieures des rails 4 sont équipées d'organes 10 de renvoi des câbles 6, 7, avantageusement constitués de manière connue en soi par des poulies.

Le capot 9 du tambour 8 est moulé monopièce avec le panneau 2, soit en une matière plastique appropriée, soit en métal. Dans le second cas il n'est pas proprement moulé mais forgé ou estampé par emboutissage.

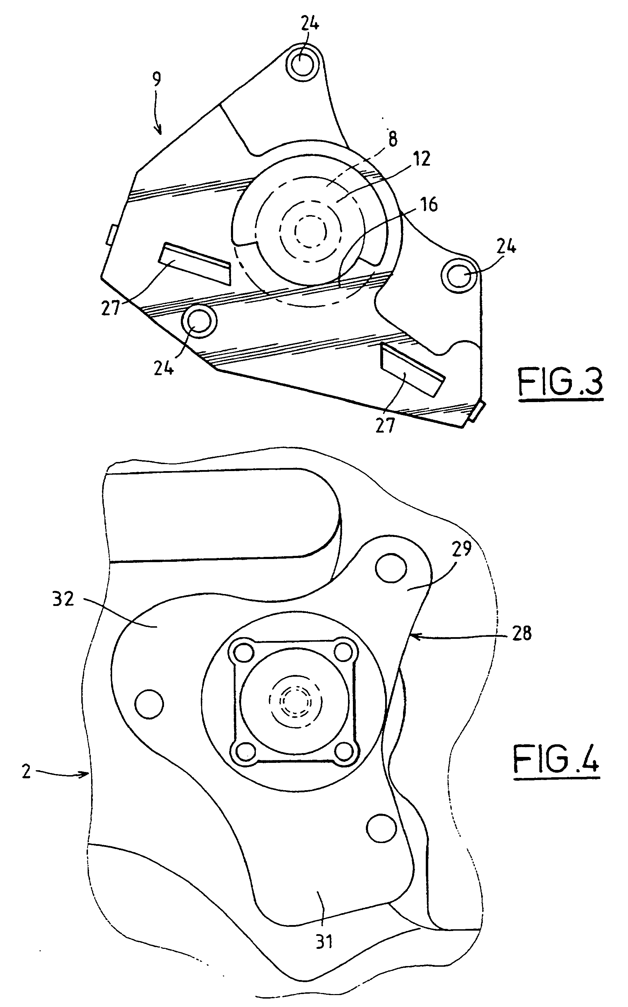

La capot 9 comporte un logement 12 délimité d'un côté par une paroi formant un couvercle circulaire 13 adapté pour recouvrir partiellement au moins l'emplacement réservé au tambour 8, en réservant un secteur angulaire libre. Du côté opposé, c'est à dire du côté « sec », le logement 12 est délimité par une oreillette latérale 16 de retenue du tambour 8 recouvrant partiellement l'emplacement prévu pour celui-ci (figure 3). L'oreillette 16 peut être réalisée par exemple sous la forme d'un secteur circulaire s'étendant sur une partie de la périphérie du tambour 8. L'oreillette 16 s'étend sur le secteur angulaire correspondant à la partie angulaire libre de la paroi du couvercle 13 dont elle complète la circonférence en vis à vis de la partie libre.

Le capot 9 comporte une paroi 17 s'étendant autour du couvercle 13 et de l'oreillette 16 avec lesquels elle est moulée d'une seule pièce. Cette paroi 17 est profilée de manière à délimiter un canal en U 18 s'étendant depuis le bord 17a de la paroi 17 vers le logement 12 du tambour 8 et débouchant radialement dans celui-ci par le secteur 16. De part et d'autre du canal 18 dont la largeur est sensiblement égale au diamètre du tambour 8, la paroi 17 forme des flancs 19 perpendiculaires au fond du canal 18. Dans ces flancs 19 débouchent des gorges latérales 21 agencées pour le passage des câbles d'entraînement 6, 7, 8' du tambour 8. Chaque gorge 21 se prolonge, du côté opposé au canal 18, par une partie élargie 22 équipée d'ailettes latérales (non visibles au dessin) de retenue de la pipe du câble correspondant.

Les gorges 21, 22 sont orientées angulairement de façon à déboucher dans le canal 18 en U et à l'entrée du logement 12 à peu près tangentiellement à ce dernier, lequel est sensiblement cylindrique. Enfin dans la paroi 17 du capot 9 sont moulés des emplacements de fixation des moyens d'entraînement du tambour 8, par exemple trois trous 24 adaptés pour recevoir des organes de fixation non représentés tels que des vis. Des nervures 25, 26 peuvent être moulées sur la paroi 17 pour renforcer celle-ci.

Le capot 9 qui vient d'être décrit est moulé d'une seule pièce avec l'ensemble du reste du panneau porteur 2 conformément à l'invention.

Lors de ce moulage, l'une des parties de l'outillage utilisé (connu en soi et non représenté), comprend des éléments en relief qui traversent des emplacements laissés libres pour la matière coulée constitutive du capot 9, et qui sont destinés à permettre la réalisation des gorges 21, 22 mais aussi des secteurs 13 et 16. Ces parties en relief laissent dans le capot 9, après leur retrait, des lumières 27 (figure 3).

Du côté « sec » du panneau 2, la fixation des moyens d'entraînement du tambour 8 en rotation au panneau 2 et coaxialement au tambour 8, est réalisée par un carter 28 (figure 4) muni de pattes 29, 31, 32 s'étendant radialement au dessus des lumières 27 et du couvercle 13 afin d'assurer l'étanchéité de la fixation du carter 28 au panneau 2.

L'agencement du couvercle 13 et de l'oreillette 16 du tambour 8 rend inutile la pince de maintien du tambour utilisée jusqu'à présent.

L'attaque tangentielle du tambour 8 par les câbles 6, 7 dans des gorges tangentielles au tambour permet d'optimiser la coopération des câbles et du tambour.

## Revendications

1. Module (1) de porte de véhicule, comprenant un panneau (2) muni de divers équipements dont un lève-vitre du type à deux rails (4) de guidage de curseurs (5) supportant la vitre et à câbles (6, 7) d'entraînement des curseurs, le lève-vitre comportant également un tambour (8) disposé dans un capot (9) et sur lequel viennent s'enrouler les câbles, des moyens de fixation du capot au panneau, ainsi que des moyens de commande du tambour en rotation disposés d'un côté du panneau opposé au côté sur lequel sont placés les rails, les câbles, le capot et le tambour, **caractérisé en ce que** le capot (9) du tambour (8) est réalisé monopièce avec le panneau (2) et comporte des moyens (13, 16) de retenue du tambour dans ledit capot.

2. Module de porte selon la revendication 1, **caractérisé en ce que** le panneau (2) et le capot (9) du tambour (8) sont moulés d'une seule pièce en matière plastique ou en métal.

3. Module de porte selon la revendication 1 ou 2, **caractérisé en ce que** le capot (9) comporte un logement (12) pour le tambour (8), délimité d'un côté par un couvercle circulaire (13) recouvrant partiellement au moins l'emplacement réservé au tambour, et du côté opposé par une oreillette latérale (16) de retenue du tambour (8) recouvrant partiellement l'emplacement de celui-ci et s'étendant sur un secteur angulaire correspondant à la partie libre du couvercle (13) et en vis à vis de celle-ci.

4. Module (1) de porte selon la revendication 3, **caractérisé en ce que** le capot (9) comporte une paroi (17) profilée de manière à délimiter un canal (18) en U s'étendant depuis le bord (17a) de la paroi (17) vers le logement (12) du tambour (8) et débouchant radialement dans celui-ci, et de part et d'autre de ce canal la paroi délimite des gorges latérales (21, 22) de passage des câbles (6, 7) d'entraînement du tambour.

5. Module selon la revendication 4, **caractérisé en ce que** les gorges (21, 22) de passage des câbles (6, 7) sont pourvues d'ailettes latérales de retenue des câbles.

6. Module selon la revendication 4 ou 5, **caractérisé en ce que** les gorges (21, 22) de passage des câbles (6, 7) sont orientées de façon à déboucher dans le canal (18) en U et à l'entrée du logement (12) du tambour (8) à peu près tangentiellement à ce dernier.

7. Module selon l'une des revendications 1 à 6, **caractérisé en ce que** le tambour (8) coopère avec des moyens de commande en rotation fixés de manière étanche au panneau (2).

## Patentansprüche

1. Fahrzeug-Türmodul (1), aufweisend ein Paneel (2), welches mit verschiedenen Installationen versehen ist, und zwar einer Fensterkurbel des Typs mit zwei Schienen (4) zur Führung.von Läufern (5), welche die Fensterscheibe halten, und mit Seilen (6, 7) zum Antrieb der Läufer, wobei die Fensterkurbel auch eine in einer Haube (9) angeordnete Trommel (8), auf welcher sich die Seile aufwickeln, Mittel zur Fixierung der Haube an dem Paneel, sowie Mittel zum Steuern der Trommel-Umdrehung aufweist, welche auf einer Seite des Paneels angeordnet sind, welche zu der Seite entgegengesetzt ist, auf welcher die Schienen, die Seile, die Haube und die Trommel platziert sind, **dadurch gekennzeichnet, dass** die Haube (9) von der Trommel (8) einstückig mit dem Paneel (2) realisiert ist und Mittel (13, 16) zum Einbehalten der Trommel in der Haube aufweist.

2. Türmodul gemäß Anspruch 1, **dadurch gekennzeichnet, dass** das Paneel (2) und die Haube (9) von der Trommel (8) aus einem einzelnen Stück aus Kunststoff oder Metall gegossen sind.

3. Türmodul gemäß Anspruch 1 oder 2, **dadurch gekennzeichnet, dass** die Haube (9) einen Sitz (12) für die Trommel (8) aufweist, welche auf einer Seite von einer kreisförmigen Kappe (13), welche zumindest teilweise den für die Trommel reservierten Platz überdeckt, und an der entgegengesetzten Seite zum Einbehalten der Trommel (8) von einer Seitenschale (16) begrenzt ist, welche teilweise den Platz der Trommel überdeckt und sich zu einem Winkelsektor erstreckt, welcher zu dem freien Teil der Kappe (13) korrespondiert und diesem gegenüberliegt.

4. Türmodul (1) gemäß Anspruch 3, **dadurch gekennzeichnet, dass** die Haube (9) eine Wand (17) aufweist, welche so ausgeformt ist, dass sie einen U-Kanal (18) begrenzt, der sich von dem Rand (17a) der Wand (17) in Richtung zu dem Sitz (12) der Trommel (8) erstreckt und radial in diesen einmündet, und auf beiden Seiten des Kanals die Wand seitliche Rillen (21, 22) zur Passage der Trommel-Antrieb-Seile (6, 7) begrenzt.

5. Modul gemäß Anspruch 4, **dadurch gekennzeichnet, dass** Rillen (21, 22) zur Passage der Seile (6, 7) mit SeitenStegen versehen sind zum Einbehalten der Seile.

6. Modul gemäß Anspruch 4 oder 5, **dadurch gekennzeichnet, dass** die Rillen (21, 22) zur Passage der Seile (6, 7) derart ausgerichtet sind, dass sie in den U-Kanal (18) und am Eingang des Sitzes (12) von der Trommel (8) ungefähr tangential zu der Letzteren einmünden.

7. Modul gemäß einem der Ansprüche 1 bis 6, **dadurch gekennzeichnet, dass** die Trommel (8) mit den Mitteln zum Umdrehungs-Steuern zusammenwirkt, die auf eine dichte Art und Weise an dem Paneel (2) fixiert sind.

## Claims

1. Vehicle door module (1) comprising a panel (2) provided with various equipment including a window operator of the type having two guide rails (4) for cursors (5) supporting the window and drive cables (6,7) for the cursors, the window operator also comprising a drum (8) disposed in a housing (9) and on which are wound the cables, means for attaching the housing to the panel, and means for controlling the rotation of the drum which are disposed on one side of the panel opposite the side on which the rails, cables, housing and drum are located, **characterised in that** the housing (9) of the drum (8) is made in one piece with the panel (2) and comprises means (13,16) for retaining the drum in said housing.

2. Door module according to claim 1, **characterised in that** the panel (2) and housing (9) of the drum (8) are moulded in one piece from plastics or metal.

3. Door module according to claim 1 or 2, **characterised in that** the housing (9) comprises a recess (12) for the drum (8) bounded on one side by a circular cover (13) partially covering at least the location reserved for the drum and on the opposite side by a lateral lug (16) for retaining the drum (8), partially covering the location thereof and extending over an angular sector corresponding to the free part of the cover (13) and opposite said part.

4. Door module (1) according to claim 3, **characterised in that** the housing (9) comprises a wall (17) profiled so as to define a U-shaped channel (18) extending from the edge (17a) of the wall (17) towards the recess (12) of the drum (8) and opening radially into the latter, and on either side of this channel the wall delimits lateral grooves (21, 22) to accommodate the drive cables (6, 7) of the drum.

5. Module according to claim 4, **characterised in that** the grooves (21, 22) for accommodating the cables (6, 7) are provided with lateral retaining tabs for the cables.

6. Module according to claim 4 or 5, **characterised in that** the grooves (21, 22) for accommodating the cables (6, 7) are oriented so as to open into the U-shaped channel (18) and into the entrance to the recess (12) of the drum (8) substantially at a tangent to the latter.

7. Module according to one of claims 1 to 6, **characterised in that** the drum (8) co-operates with rotation control means fixed in sealed manner to the panel (2).
